Europäisches Patentamt

European Patent Office

Office européen des brevets

(11) Publication number: **0 106 340**
**B1**

(12) EUROPEAN PATENT SPECIFICATION

(45) Date of publication of patent specification: **21.06.89**

(51) Int. Cl.⁴: **G 01 S 7/28,** G 01 S 13/52,
G 01 S 13/20

(21) Application number: **83110275.1**

(22) Date of filing: **14.10.83**

(54) Device for automatic cancelling of undesired radar echoes.

(30) Priority: **15.10.82 IT 4927282**

(43) Date of publication of application:
**25.04.84 Bulletin 84/17**

(45) Publication of the grant of the patent:
**21.06.89 Bulletin 89/25**

(84) Designated Contracting States:
**DE FR GB NL SE**

(56) References cited:
**FR-A-2 321 706
GB-A- 892 282
US-A-3 828 348
US-A-4 040 055
US-A-4 095 224**

**ABSTRACTS OF NEW TECHNOLOG, NTN-
77/0318, DEPARTEMENT OF DEFENSE, 1977,
US, "A digital phase correction technique for
coherent-on-receive radar systems"**

(73) Proprietor: **SELENIA INDUSTRIE
ELETTRONICHE ASSOCIATE S.p.A.
Via Tiburtina, KM 12.400
I-00131 Roma (IT)**

(72) Inventor: **Galati, Gaspare
Via Pisino 151
I-00177 Rome (IT)**
Inventor: **Giaccari, Ennio
Via Fogazzaro 74
I-00137 Rome (IT)**

(74) Representative: **Gustorf, Gerhard, Dipl.-Ing.
Patentanwalt Dipl.-Ing. Gerhard Gustorf
Bachstrasse 6 A
D-8300 Landshut (DE)**

Courier Press, Leamington Spa, England.

## Description

The present invention refers to the field of MTI radar (MTI=moving target indicator). It relates to a device ensuring in radar systems, particularly in surveillance radar systems generating a non-ambiguous indication of the distance and having a transmitter with an oscillator (which is normally a magnetron), not only the cancelling of clutter of the second trace, that is from second time around echoes, but also an improvement of the effect when compared with the clutter of distant first traces.

As is well known, the cancelling of the clutter of second trace and the non-degradation of the capacity in case of clutter of a distant first trace may also be achieved by activating coherent radars which during transmission make use of a power amplifier (normally a klystron), as in this case it is possible to rely on the coherency for a plurality of radar ranges between the transmitted and the received pulses.

For the cancelling of echoes of the second trace it is necessary, of course, to maintain a constant PRF (pulse repetition frequency). A systematic solution to avoid the suppression of the blind velocities in this case consists, for instance, in providing two bundles of radar ranges in the time of persistance of the antenna towards the target, maintaining constant the PRF in the region of the individual bundle.

In the devices provided with an oscillator having a magnetron, which devices present great advantages of simple construction, of weight, of space required and of costs compared to devices provided with an amplifier having a klystron and whose classical constructional conception provides a coherent oscillator which is phase-locked with respect to the phase of the transmission pulse, the coherency is maintained only in the region of each individual radar ranges which does not render possible the cancellation of the second trace echoes.

Further, in this type of device, there is a contribution to the degradation of the characteristics as against the distant first trace clutter, due to the short-termed instability of the coho (coherent oscillator).

In fact, as this oscillator/should be able to be phase-locked with respect to the phase of the transmission pulse during the short period of time of said pulse (normally in the order of a microsecond), it cannot be stabilized by resonators having a very high Q value, which limits the characteristics of short-termed frequency stability of said oscillator.

This causes not only the contributions due to the further instabilities of the device but also a limitation of the improvement factor, due to the term $2\pi\Delta f T_o$ in which $T_o$ is the delay time of the echo reception and $\Delta f$ is the short-term instability of the coherent oscilator (from pulse to pulse).

A device arranged to eliminate clutter in first time around echoes and having the features mentioned in the preamble of the claim is known from "Abstracts of New Technology", NTN-77/0318 published in 1977 by the US Air Force Systems Command. The features distinguishing the invention from the device according to the cited abstract are specified in the characterising portion of the claim.

This device allows said result to be acheived because it compensates the loss of coherency between the phase of the echo received and the phase of the corresponding pulse transmitted by means of measures of comparison between the phases of the oscillations in question and the phase of a reference oscillation coming from an oscillator which has characteristics of high frequency stability. In particular the phase of the transmitted pulse, said phase being extracted by superimposing it with a reference oscillation, is stored in form of a complex number. Said number applied to the first of two inputs of a complex multiplier allows the received signal to be phased which to this end is applied to the other input of the multiplier. Thus, the output signal of the multiplier is coherent with the last transmitted pulse (for the cancellation of the first trace echoes) and/or with the preceding pulse (for the cancellation of the second trace echoes).

In this way it seems that with respect to first and second trace clutter, effects may be obtained which are comparable with characteristic effects of a coherent pulse train radar. Of course, in radar devices using during transmission an oscillator having a magnetron or an amplifier having a klystron, remains a different spectral purity of the emission. The type of environment in which the device in question should operate is characterized by the presence of earth clutter the power thereof rendering possible the phenomenon of the second trace echoes, particularly in abnormal propagation conditions.

The spectrum of the earth clutter is characterized by a zero central frequency and by a bandwidth which is very small when compared with the case of the meteorological clutter. Therefore, a conventional MTI cancelling device of the single canceller type (i.e. with two pulses) or, better, of the double canceller type (i.e. with three pulses) in practical applications is sufficient to reduce the power of the clutter by three or even four orders of magnitude, provided that its coherency from radar sweep to radar sweep be maintained, which indeed is the function of the illustrated device.

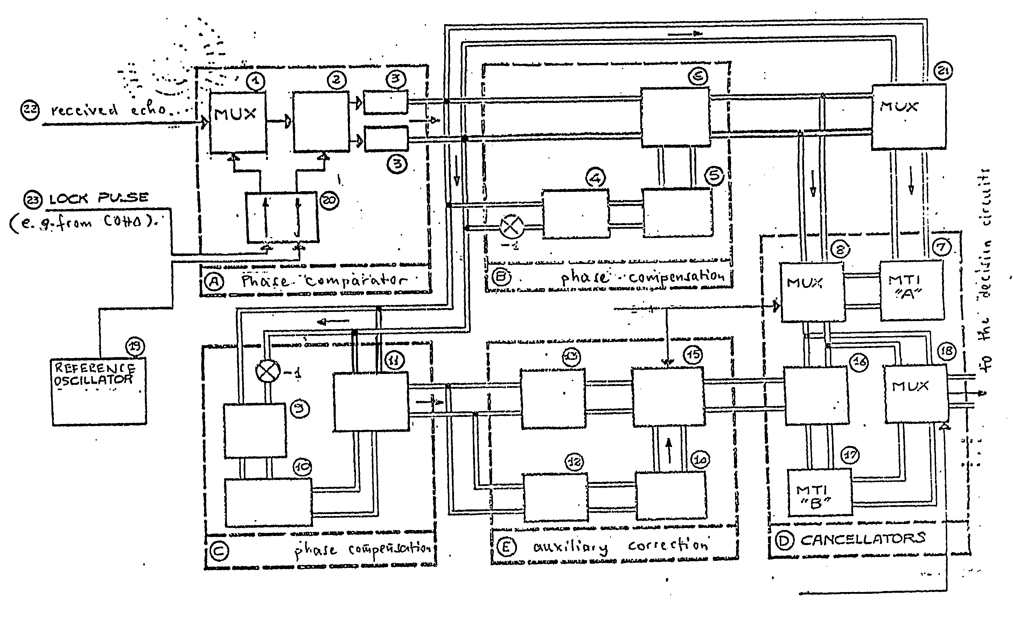

A preferred embodiment will be described hereinafter with reference to Fig. 1 illustrating the functional diagram of the invention. In this diagram are represented:

a) The phase-comparator circuit A, consisting of the multiplexer 1, of the double path and two-position switch 20, of the coherent detector 2 and of the A/D (analog to digital) converters 3. The oscillations of the received echo 22 and the reference oscillation "lock pulse" 23 are fed from the radar device to this circuit and a reference oscillation having characteristics of high frequency stability is fed from the oscillator 19 which has a high frequency stability (e.g. stabilized by means of quartz) thereto. As mentioned above, only in the operation mode designed to eliminate second time around clutter it is necessary that the radar apparatus using the device is provided with a coherent oscillator in order to furnish the reference oscillation "lock pulse".

In this circuit, the phases of the oscillation in question are compared with the phase of the oscillations coming from the oscillator 19.

b) The phase compensation circuit B, consisting of a register 4, of a normalizer 5 which divides the input data by the maximal available value. Having a unit module and of a complex multiplier 6. This circuit performs the phase compensation of the echo received with the stored phase of the transmission lock pulse.

c) The phase compensation circuit C, consisting of a register 9, of a normalizer 10 having a unit module and of a complex multiplier 11. This circuit performs the phase compensation with regard to the stored phase of the preceding lock pulse.

d) The MTI cancellation circuit D consisting of the MTI "A" 7 and the MTI "B" 17 connected in cascade and of the multiplexers 8 and 18 as well as of multiplier 16.

e) The auxiliary correction circuit E consists of the register 13, the MTI compensator 12, of the register 14 and of the MUX (multiplexer) 15.

Now the operation of the device will be described with regard to the different conditions of the received clutter.

A. Only the first trace clutter be present (cancelling of distant echoes). In this case, the phase compensation circuit C and the auxiliary correction circuit E are disabled and in the MTI cancellation circuit operates only the MTI "A", the oscillations coming from the reference oscillator 19 of high stability are applied to the coherent detector 2 of the phase-comparator circuit by the switch 20. The MUX 21 connects the MTI "A" to the output of the complex multiplier 6.

The MUX 1 alternately applies the lock pulse oscillation in the moment of transmission and the echo received during the time period of the radar range sweep to the coherent detector 2. The complex signal obtained by the comparison with the phase of the reference oscillation coming from the oscillator 19 is converted to digital by the A/D converters 3, one for each of its components in phase and in quadrature.

The imaginary part of the signal representing the lock pulse is multiplied by $(-1)$ and stored in the register 4, normalized at unit module in 5 and applied to one of the two inputs of the complex multiplier 6.

The signal representing the received echo is applied to the other input of the complex multiplier 6. Therefore, at the output of the complex multiplier 6 the received signal is coherent with the lock pulse and consequently with the transmitted pulse.

The phased signal is fed to the MTI "A" 7 which actuates the suppression of the clutter echoes of small or great distance. The MUX 8 sends, by means of the MUX 18 connected thereto in this operation mode, either the video cancelled by the MTI "A" 7 or the not cancelled video (normal) to the decision circuits.

B. The second trace clutter be present.

In this case, the phase compensation circuit B is disabled, the oscillation coming from the lock pulse which, in this case, is furnished by a COHO is applied to the coherent detector 2 by means of the switch 20. The MUX 21 connects the exit of the A/D converter 3, in the operation mode B1, to the MUX 8 or, in the operation mode B2, to the MTI "A" 7.

These two subcases of the mere presence of the second trace clutter and of the simultaneous presence of the two types of clutters will be considered now.

B1. Only the second trace clutter be present.

The complex signal relating to the transmitted pulse converted in digital by the A/D converters 3 is multiplied by $(-1)$ and stored in the register 9 and then, after the normalization of the module 10, fed to the complex multiplier 11 in order to extract the phase difference between the last two transmitted pulses.

The corresponding complex unit number is stored in the register 13 and fed to the first input of the complex multiplier 16 by means of the MUX 15. By means of the MUX 8, the signal relating to the received second trace echo being coherent with the penultimate tarnsmitted pulse arrives at the second input of the complex multiplier 16. The output of the complex multiplier 16 is coherent with the last transmitted pulse and is sent to the MTI 17 which effects the cancellation. By the MUX 18 the cancelled signal finally is sent to the decision circuits.

B2. Simultaneous presence of first and second trace clutter.

In this case, the output of the coherent detector 2 is a signal which varies with the phase difference between the actual pulse and the preceding pulse.

This remainder is obviously not cancelled by the MTI "A" 7. The MTI compensator 12 effects on the output signal of the complex multiplier 11 (which varies itself in accordance with the phase variation between the actual pulse and the preceding pulse) the same type of processing as effected by the MTI "A" 7. The phase compensation effected by the complex multiplier 16 wherein the output of the compensator 12 (stored in the register 14) and the output of the MTI "A" 7 are applied to the inputs thereof allows a non-variable signal (which, in case of Doppler is zero as the clutter signal) to be fed to the MTI "B" 17 which is then cancelled. Of course, if the first trace echo has Doppler velocities being different from zero, this is detected by the MTI "B" 17.

C. Presence of second trace clutter and distant or close first trace clutter.

In this case, all circuits are enabled.

The MUX 21 connects the MTI "A" 7 to the output of the complex multiplier 6. The reference oscillation coming from the oscillator 19 is applied to the coherent detector 2 by means of the switch 20.

This operation mode combines the modes as described in A and as described in B and corresponds to the general case of received clutter. As explained, the device uses all circuits illustrated in functional diagram of Figure 1 only in case of the more general operation mode as described in C.

## Claim

A device for cancelling clutter signals resulting from first or second time around echoes received in the receiving section of a radar system in response to the transmission of radar pulses from a non-coherent source in the transmission section of this system, said device comprising:
a stable reference oscillator (19),
a phase comparator circuit (A) arranged to derive first phase signals indicative of the difference between the phase of the reference oscillator (19) and the phase of the transmitted radar pulses and second phase signals indicative of the difference between the phase of the reference oscillator (19) and the phase of the received echoes,
a first phase compensation circuit (B) arranged to generate third phase signals representative of the phase difference between the associated first and second phase signals, and
MTI circuit means (D) comprising a first MTI processor (7) arranged to eliminate from said third phase signals clutter components contained in the first time around echoes, the device being characterized by
a second phase compensation circuit (C) arranged to generate fourth phase signals representative of the phase difference between first phase signals associated with pairs of succeeding radar pulses,
an auxiliary correction circuit (E) including a second MTI processor (12) whose input is connected to the output of said second phase compensation circuit (C),
a phase subtracting unit (16) and a third MTI processor (17), said unit and said processor being included in said MTI circuit means (D),
switching means (8, 15, 21) arranged to establish or interrupt selected ones of the following connections:
(i) between the output of the first phase compensation circuit (B) and the first MTI processor (7);
(ii) between the output of the phase comparator (A) and the first MTI processor (7);
(iii) between the output of the first phase compensation circuit (B) and one input of the phase subtracting unit (16);
(iv) between the output of the phase comparator (A) and said one input of the phase subtracting unit (16);
(v) between the output of the second phase compensation circuit (C) and a further input of said phase subtracting unit (16);

(vi) between the output of said auxiliary correction circuit (E) and said further input of said phase subtracting unit (16).

## Patentanspruch

Vorrichtung zum Löschen von Cluttersignalen, die aus Erst- oder Zweitauslenkechos resultieren, welche in dem Empfangsabschnitt eines Radarsystems ansprechend auf das Aussenden von Radarimpulsen aus einer nicht-kohärenten Quelle in den Senderabschnitt des Systems empfangen werden, umfassend:
einen stabilen Bezugsoszillator (19),
eine Phasenvergleicherschaltung (A), die derart ausgebildet ist, daß sie erste Phasensignale ableitet, die kennzeichnend sind für die Differenz zwischen der Phase des Bezugsoszillators (19) und der Phase der gesendeten Radarimpulse, und um zweite Phasensignale abzuleiten, die kennzeichnend sind für die Differenz zwischen der Phase des Bezugsoszillators (19) und der Phase der empfangenen Echos,
eine erste Phasenkompensationsschaltung (B), die derart ausgebildet ist, daß sie dritte Phasensignale erzeugt, die repräsentativ sind für die Phasendifferenz zwischen den zugehörigen ersten und zweiten Phasensignalen, und
eine MTI-Schaltungseinrichtung (D) mit einem ersten MTI-Prozessor (7), der derart ausgebildet ist, daß er aus den dritten Phasensignalen Clutterkomponenten, die in den Erstauslenkechos enthalten sind, eliminiert, gekennzeichnet durch
eine zweite Phasenkompensationsschaltung (C), die derart ausgebildet ist, daß sie vierte Phasensignale erzeugt, die repräsentativ sind für die Phasendifferenz zwischen Paaren aufeinanderfolgender Radarimpulse zugehörigen ersten Phasensignalen,
eine Hilfskorrekturschaltung (E) mit einem zweiten MTI-Prozessor (12), dessen Eingang an den Ausgang der zweiten Phasenkompensationsschaltung (C) angeschlossen ist,
eine Phasensubtrahiereinheit (16) und einen dritten MTI-Prozessor (17), wobei die Einheit und der Prozessor in der MTI-Schaltungseinrichtung (D) enthalten sind,
eine Schaltvorrichtung (8, 15, 21), die derart ausgebildet ist, daß ausgewählte von folgenden Verbindungen hergestellt oder unterbrochen werden:
(i) zwischen dem Ausgang der ersten Phasenkompensationsschaltung (B) und dem ersten MTI-Prozessor (7);
(ii) zwischen dem Ausgang des Phasenvergleichers (A) und dem ersten MTI-Prozessor (7);
(iii) zwischen dem Ausgang der ersten Phasenkompensationsschaltung (B) und einem Eingang der Phasensubstrahiereinheit (16);
(iv) zwischen dem Ausgang des Phasenvergleichers (A) und dem einen Eingang der Phasensubstrahiereinheit (16);
(v) zwischen dem Ausgang der zweiten Phasenkompensationsschaltung (C) und einem weiteren Eingang der Phasensubstrahiereinheit (16);

(vi) zwischen dem Ausgang der Hilfskorrekturschaltung (E) und dem weiteren Eingang der Phasensubstrahiereinheit (16).

## Revendication

Dispositif pour annuler des signaux parasites résultant d'échos reçus pour la première ou la deuxième fois dans la section de réception d'un système de radar en réponse à la transmission d'impulsions radar à partir d'une source non cohérente dans la section de transmission de ce système, ledit dispositif comprenant:

un oscillateur stable de référence (19),

un circuit comparateur de phases (A) disposé pour dériver des premiers signaux de phase indicatifs de la différence entre la phase de l'oscillateur (19) de référence et la phase des impulsions radar transmises, et des second signaux de phases indicatifs de la différence entre la phase de l'oscillateur (19) de référence et la phase des échos reçus;

un premier circuit de compensation de phase (B) disposé pour engendrer des troisièmes signaux de phases représentatifs de la différence de phase entre les premiers et seconds signaux associés de phase; et

des moyens (D) de circuit SEF comprenant un premier processeur SEF (7) disposé pour éliminer lesdits troisième signaux de phase des composants parasites contenus dans les échos reçus pour la première fois; le dispositif étant caractérisé par:

un second circuit de compensation de phase (C) disposé pour engendrer les quatrième signaux de phase représentatifs de la différence de phase entre des premier signaux de phase associés avec des paires d'impulsion radar successives;

un circuit auxiliaire de correction (E) comprenant un second processeur SEF (12) dont l'entrée est reliée à la sortie dudit second circuit de compensation de phase (C);

une unité de soustraction de phase (16) et un troisième processeur SEF (17), ladite unité et ledit processeur étant compris dans lesdits moyens de circuit SEF (D);

des moyens de commutation (8, 15, 21) disposés pour établir ou interrompre des connexions choisies parmi les suivantes:

(i) entre la sortie du premier circuit de compensation de phase (B) et le premier processeur SEF (7);

(ii) entre la sortie du comparateur (A) de phase et le premier processeur SEF (7);

(iii) entre la sortie du premier circuit de compensation de phase (B) et une première entrée de l'unité de soustraction de phase (16);

(iv) entre la sortie du comparateur de phase (A) et ladite première entrée de l'unité de soustraction de phase (16);

(v) entre la sortie du second circuit de compensation de phase (C) et une seconde entrée de ladite unité de soustraction de phase (16);

(vi) entre la sortie dudit circuit auxiliaire (E) de correction et ladite seconde entrée de ladite unité de soustraction de phase (16).